# EUROPEAN PATENT APPLICATION

(11) **EP 1 920 824 A1**
(43) Date of publication of application: **14.05.2008**
(21) Application number: 06255339.1
(22) Date of filing: 17.10.2006
(51) Int. Cl.: B01F 17/14, B01F 17/18, C07F 9/28

(54) **Ionic liquids and uses thereof**

(71) Applicant: The Queen's University of Belfast, Belfast BT7 1NN, Northern Ireland (GB)
(72) Inventor: The designation of the inventor has not yet been filed
(74) Representative: Hamer, Christopher K.

(57) **Abstract**

The invention provides a salt that is in a liquid state at a temperature below 150°C and in which the anion has one of the general formulae

R^{a}.P(O).O₂²⁻

R^{a}.P(O).(OR^{b}).O⁻

R^{a}.R^{b}.PO⁻

(R^{a}O)(R^{b}O).PO⁻

(R^{a}O).PO.O₂²⁻

in which one of R^{a} and R^{b} represents an alkyl, alkenyl or alkynyl group having at least 8 carbon atoms, which may be unsubstituted or substituted by one or more substituents selected from halogen atoms, hydroxyl groups, and phenyl groups, and which may be optionally interrupted by one or more oxygen atoms; and the other of R^{a} and R^{b} (if present) has one of these meanings or represents a C₁₋₇ alkyl, alkenyl or alkynyl group, which may be unsubstituted or substituted by one or more substituents selected from halogen atoms, hydroxyl groups, C₁₋₄ alkoxy groups, and phenyl groups. Such salts are useful as surfactants, and may be used to prepare emulsions and foams.

## Description

This invention relates to ionic liquids and certain uses thereof. Particularly, it relates to the use of ionic liquids as surfactants (emulsifiers), and to the use of ionic liquid surfactants (emulsifiers) for forming stable emulsions and microemulsions.

Room-temperature ionic liquids have been shown to be of great value in a wide variety of solvent applications owing to the ability to tailor their physical properties to the particular solvent application. This is achieved by varying the molecular structure of the components of the ionic liquid. Accordingly, ionic liquids have become known as "Designer Solvents" and have been subject to a great deal of interest in the chemical, pharmaceutical, petrochemical and chemical engineering industries.

An ionic liquid is an ionic material, i.e. a salt comprised of an anion and a cation, that is in a liquid state at a temperature of below 150°C, particularly, at a temperature of below 100°C. Owing to ionic liquids being comprised entirely of discrete ions, they show vastly reduced vapour pressures when compared with traditional organic solvents thereby minimising the risk of atmospheric contamination. As ionic liquids are essentially nonvolatile, they have a further advantage when compared with traditional organic solvents in that they have no odour thereby reducing health concerns. Yet a further advantage of ionic liquids when compared with traditional organic solvents is that they can be composed of ions of low toxicity.

The flexibility of ionic liquids as solvents allows them to be tailored to have the desired solubility for the intended solute. Thus, ionic liquids have found utility as solvents for a wide variety of materials including heavy oils, coal residues, inorganic crystalline materials and silicon compounds. Ionic liquid solvents can also be tailored to have the desired miscibility with an intended cosolvent. Thus, a wide variety of ionic liquids solvents are available which show the whole range of miscibility with water or organic cosolvents. Ionic liquids are also available that form stable emulsions with water or organic solvents where the ionic liquid forms either the continuous or discontinuous phase of the emulsion.

Our copending application PCT/GB2006/001359 relates to the synthesis of certain selected surface active ionic liquids that are capable of reducing the interfacial surface tension between two or more phases selected from the group consisting of solid, liquid, gaseous, ionic and supercritical phases. The enhanced miscibility of the phases and/or the lowering of surface tension forces resulting from the employment of the ionic liquid surfactants of the present invention can be used to aid the formation of emulsions, microemulsions or foams. The present invention provides additional surface active ionic liquids.

Accordingly, the present invention provides a salt that is in a liquid state at a temperature below 150°C and in which the anion has one of the general formulae

R^{a}.P(O).O₂²⁻

R^{a}.P(O).(OR^{b}).O⁻

R^{a}.R^{b}.PO⁻

(R^{a}O)(R^{b}O).PO⁻

(R^{a}O).PO.O₂²⁻

in which one of R^{a} and R^{b} represents a straight-chain or branched alkyl, alkenyl or alkynyl group having at least 8 carbon atoms, preferably from 8 to 30 carbon atoms, more preferably 12 to 24 carbon atoms, most preferably 16 to 20 carbon atoms, which may be unsubstituted or substituted by one or more substituents selected from halogen atoms, preferably chlorine and/or fluorine atoms, hydroxyl groups, and phenyl groups, and which may be optionally interrupted by one or more oxygen atoms; and the other of R^{a} and R^{b} (if present) has one of these meanings or represents a C₁₋₇ alkyl, alkenyl or alkynyl group, which may be unsubstituted or substituted by one or more substituents selected from halogen atoms, preferably chlorine and/or fluorine atoms, C₁₋₄ alkoxy groups, preferably methoxy and/or ethoxy groups, hydroxyl groups, and phenyl groups.

Preferably, each of R^{a} and R^{b} represents a hydrocarbyl or a halogenated hydrocarbyl group, for example a fluorinated hydrocarbyl group. Particularly preferred alkyl groups R^{a} and/or R^{b} include dodecyl, hexadecyl, octadecyl, and 2,4,4-trimethylpentyl. Where R^{a} and/or R^{b} is interrupted by one or more oxygen atoms, R^{a} and/or R^{b} may have the formula -(CH₂CH₂O)ₓR (where R is H or methyl and x is an integer of from 4 to 15, preferably 5 to 10. Where one of R^{a} and R^{b} represents a group having up to 7 carbon atoms, it preferably represents a C₁₋₄ alkyl group, for example a methyl or ethyl group.

The nature of the cation present in the salt according to the invention is not crucial, provided that, together with the anion, it forms a salt which is in a liquid state at a temperature below 150°C, preferably below 100°C. Thus, the cation may for example be a quaternary ammonium or phosphonium ion, or a cation derived from an aromatic or non-aromatic heterocyclic ring structure, for example, a heterocyclic ring structure selected from imidazolium, imidazolinium, pyridinium, pyrazolium, thiazolium, isothiazolinium, azathiozolium, oxothiazolium, oxazinium, oxazolium, oxaborolium, dithiozolium, trizdium, selenozolium, oxaphopholium, pyrollium, borolium, furanium, thiophenium, phospholium, pentazolium, indolium, indolinium, oxazolium, isooxazolium, isotriazolium, tetrazolium, benzofuranium, diborzofuranium, benzothiophenium, dibenzothiophenium, thiadiazolium, pyrimidinium, pyrazinium, pyridazinium, piperazinium, piperidinium, morpholenium, pyranium, annolinium, phthalzinium, quinazolinium, quinaxalinium, quinolinium, isoquinolinium, thazinium, oxazinium, and azaannulenium. Preferably, the heterocyclic ring structure has at least one N heteroatom, and optionally an O heteroatom. Especially preferred heterocycles are pyridine and imidazole.

The cation may itself contribute to the surfactant properties of the salt, in which case it may advantageously be selected from the group consisting of:
(a) quaternary ammonium or phosphonium ions of general formula:

   [R¹R²R³R⁴M]⁺

   wherein M is N or P;
   R¹ and R² are independently selected from methyl and ethyl groups;
   R³ is a C₈ to C₃₀ alkyl group, preferably a C₁₂ to C₂₈ alkyl group, for example, a C₁₄ to C₂₄ alkyl group and
   R⁴ is selected from the group consisting of methyl, ethyl and a C₈ to C₃₀ alkyl group, (preferably a C₁₂ to C₂₈ alkyl group, for example, a C₁₄ to C₂₄ alkyl group). Particularly, preferred quaternary ammonium or phosphonium cations of this class include hexadecyltrimethylphosphonium, hexadecyltriethylphosphonium, octadecyltrimethylphosphonium, octadecyltriethylphosphonium, dihexadecyldimethylphosphonium, dioctadecyldimethylphosphonium hexadecyltrimethylammonium, hexadecyltriethylammonium, octadecyltrimethylammonium, octadecyltriethylammonium, dihexadecyldimethylammonium, and dioctadecyldimethylammonium.
(b) quaternary ammonium or phosphonium ions of general formula:

   [R¹R²R³R⁴M]⁺

   wherein M is N or P;
   R¹ and R² are independently selected from methyl and ethyl groups;
   R³ is -(CH₂)ₙC₆H₄R' wherein n is an integer of from 0 to 5, preferably, 0 to 3; and R' is selected from the group consisting of H, Cl, Br, I, NO₂, C₁ to C₃₀ alkyl groups (preferably C₁ to C₂₀ alkyl groups), -SO₂R" -SOR" and -C(O)R" (wherein R" is a C₁ to C₃₀ alkyl group, preferably a C₁ to C₂₀ alkyl group) with the proviso that the R³ group has at least 8 carbon atoms; and
   R⁴ is a C₈ to C₃₀ alkyl group (preferably a C₁₂ to C₂₈ alkyl group, for example, a C₁₄ to C₂₄ alkyl group) or is an R³ group.
(c) triethanolamine ester quaternary ammonium or phosphonium ions of general formula:

   [(R²CO₂CH₂CH₂)₂M(R¹)CH₂CH₂OH]⁺

   wherein M is N or P;
   R¹ is methyl or ethyl; and
   R² is a C₅ to C₃₀ alkyl group, preferably a C₁₀ to C₂₈ alkyl group, more preferably a C₁₄ to C₂₄ alkyl group;
(d) quaternised polyoxyethylenated (POE) long-chain amines:

   [R¹R²N((CH₂CH₂O)ₓH)₂]⁺

   wherein R¹ and R² are independently selected from methyl and ethyl; and
   x is an integer of from 4 to 15, preferably, 5 to 10;
(e) quaternary ammonium ions of general formula:

   [R¹R²R³NOR⁴]⁺

   wherein R¹ and R² are independently selected from methyl and ethyl;
   R³ is a C₈ to C₃₀ alkyl group, preferably a C₁₂ to C₂₈ alkyl group, most preferably, a C₁₄ to C₂₄ alkyl group; and
   R⁴ is H or a C₁ to C₄ alkyl, preferably, H, methyl or ethyl.
   Quaternary ammonium ions of this type may be prepared by protonating or alkylating the corresponding amine oxide, R¹R²R³N⁺O⁻.
(f) quaternary ammonium ions of general formula:

   [(CH₃)₃N(CH₂CH₂O)ₓR¹]⁺

   wherein x is an integer of from 1 to 5, preferably 2 to 3 and R¹ is a C₁ to C₃₀ alkyl group with the proviso that the -(CH₂CH₂O)ₓR¹ substituent has at least 8 carbon atoms. Quaternary ammonium salts of this class are derived from choline,

   [(CH₃)₃N(CH₂CH₂OH)]⁺.
(g) quaternary ammonium ions of general formula:

   [R¹R²NCH₂CH₂NR³R⁴R⁵]⁺
wherein R¹, R², R³ and R⁴ are independently selected from methyl and ethyl; and
R⁵ is a hydrocarbyl group selected from (i) C₈ to C₃₀ alkyl groups or (ii) -(CH₂)ₙC₆H₄R' wherein n is an integer of from 0 to 5, R¹ is selected from the group consisting of H, Cl, Br, I, NO₂, C₁ to C₃₀ alkyl groups (preferably C₁ to C₂₀ alkyl groups), -SO₂R", -SOR" and - C(O)R" (wherein R" is a C₁ to C₃₀ alkyl group, preferably a C₁ to C₂₀ alkyl group) with the proviso that R⁵ has at least 8 carbon atoms.
Quaternary ammonium ions of this class may, for example, be prepared from tetramethylethylenediamine or tetraethylethylenediamine by reaction with R⁵X where X is a good leaving group, for example, a halide.

The cation may also comprise an aromatic or non-aromatic heterocyclic ring structure having at least one hydrophobic tail group, preferably a hydrocarbyl tail group as a substituent on the heterocyclic ring. It is envisaged that the heterocyclic ring may have from 1 to 3 hydrocarbyl substituents. Suitably, the heterocyclic ring structure of the cation is selected from those listed above, and preferably, the heterocyclic ring structure has at least one N heteroatom, and optionally an O heteroatom.

Preferred heterocyclic cations include:
(a) non-aromatic heterocycles such as: 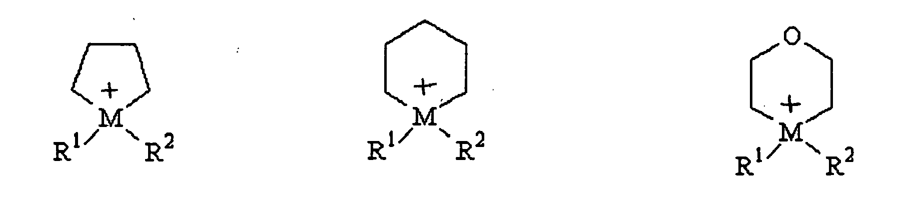 wherein M is N or P;
   R¹ is C₈ to C₃₀ alkyl group; and
   R² is selected from methyl, ethyl or a C₈ to C₃₀ alkyl group. Where R¹ and R² are both C₈ to C₃₀ alkyl groups, it is preferred that R¹ and R² are of different length, for example, R¹ may be a C₈ to C₁₂ alkyl group and R² a C₁₆ to C₃₀ alkyl group.
(b) Imidazolium ions of the general formula: 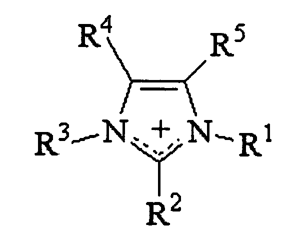 wherein R¹ is a C₈ to C₃₀ alkyl group, preferably a C₁₂ to C₂₈ alkyl group, for example, a C₁₆ to C₂₄ alkyl group;
   R² is selected from H, methyl and ethyl, preferably H;
   R³ is selected from methyl, ethyl and C₈ to C₃₀ alkyl groups, preferably, methyl or ethyl; and
   R⁴ and R⁵ are H or a halide (for example, Cl or Br).
(c) pyridinium ions of the general formula: 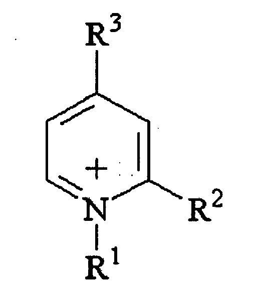 wherein R¹ is hydrophobic substituent selected from (i) C₈ to C₃₀ alkyl groups (preferably, C₁₂ to C₂₀ alkyl groups) and (ii) -(CH₂)ₙC₆H₄R' wherein n is an integer of from 0 to 5, R¹ is selected from the group consisting of H, Cl, Br, I, NO₂, C₁ to C₃₀ alkyl groups (preferably C₁ to C₂₀ alkyl groups), -SO₂R", -SOR" and -C(O)R" (wherein R" is a C₁ to C₃₀ alkyl group, preferably a C₁ to C₂₀ alkyl group) with the proviso that -(CH₂)ₙC₆H₄R' contains at least 8 carbon atoms; and
   R² and R³ are independently selected from H and dimethylamino, or are R¹ groups. Particularly preferred pyridinium ions of this class include dodecylpyridinium, 1,4-didodecylpyridinium, hexadecylpyridinium, 1,4-dihexadecylpyridinium, octadecylpyrinidium, 1,4-octadecylpyridinium, 4-(dimethylamino)dodecylpyridinium, 2-(dimethylamino)dodecylpyridinium, 4-(dimethylamino)hexadecylpyridinium and 2-(dimethylamino)hexadecylpyridinium. Where the pyridinium ion has a dimethylamino substituent in the 2- or 4- position, the pyridinium ion may be prepared from 4-dimethylaminopyridine or 2-dimethylaminopyridine respectively.
(d) an oxazole of general formulae: 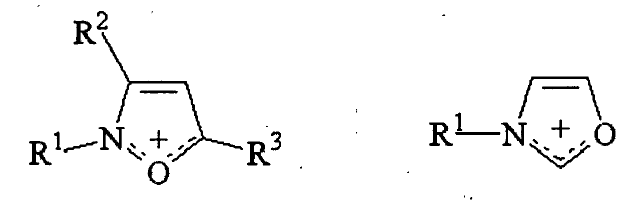 wherein R¹ is a hydrocarbyl substituent selected from (i) C₈ to C₃₀ alkyl groups (preferably C₁₂ to C₂₈ alkyl groups) and (ii) -(CH₂)ₙC₆H₄R' wherein n is an integer from 0 to 5, R' is selected from the group consisting of H, Cl, Br, I, NO₂, C₆ to C₃₀ alkyl groups (preferably C₁ to C₂₀ alkyl groups), -SO₂R", -SOR" and -C(O)R" (wherein R" is a C₁ to C₃₀ alkyl group, preferably a C₁ to C₂₀ alkyl group) with the proviso that -(CH₂)ₙC₆H₄R' contains at least 8 carbon atoms;
   and R² and R³ are independently selected from H, methyl or ethyl.
(e) derivatives of 1,5-diazabicyclonon-5-ene (DBN) and 1,9-diazabicycloundec-7-ene (DBU) of general formulae: 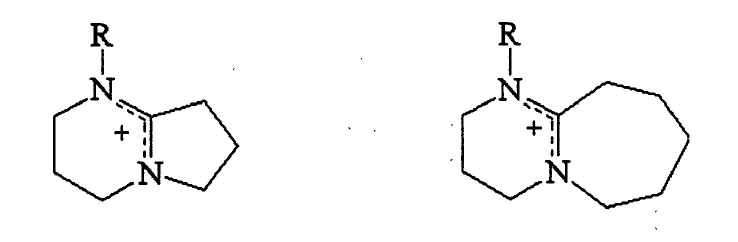 wherein R is a hydrocarbyl substituent selected from (i) C₈ to C₃₀ alkyl groups and (ii) -(CH₂)ₙC₆H₄R' wherein n is an integer from 0 to 5, R' is selected from the group consisting of H, Cl, Br, I, NO₂, C₁ to C₃₀ alkyl groups (preferably C₁ to C₂₀ alkyl groups), - SO₂R", -SOR" and -C(O)R" (wherein R" is a C₁ to C₃₀ alkyl group, preferably a C₁ to C₂₀ alkyl group) with the proviso that -(CH₂)ₙC₆H₄R' contains at least 8 carbon atoms.
The salts of the present invention are useful as surfactants (emulsifiers). Accordingly, the present invention provides a water in oil or oil in water emulsion which comprises (i) an oil phase, (ii) an aqueous phase and (iii) an ionic liquid salt according to the invention.

Surfactants may be classified using the hydrophilic-lipophilic balance (HLB) system that employs a scale of 0 to 20 based on the affinity of the surfactants for oil or water. Surfactants with low HLB values are more lipophilic while surfactants with higher HLB values are more hydrophilic. The HLB values of the ionic liquid surfactants may be determined empirically by comparison with conventional surfactants of predetermined HLB value.

In general, ionic liquid surfactants will have the following properties or functions based on their HLB values:
1-3 antifoaming properties
3-8 water in oil emulsification
7-9 wetting properties
9-18 oil in water emulsification
15-20 solubilising properties.

In particular, surfactants with HLB values of 3 to 8 are more oil soluble and will form water in oil emulsions while surfactants having an HLB value of greater than 9, preferably, 9 to 18, are more water soluble and will form oil in water emulsions.

An emulsion of the invention may be a microemulsion. An advantage of the microemulsion of the present invention is that it has a low interfacial tension of less than 1 mN m⁻¹.

As discussed above, depending upon the HLB value of the ionic liquid surfactant, the microemulsion may be an oil in water microemulsion where the oil is dispersed in a continuous aqueous phase or a water in oil microemulsion where the water is dispersed in a continuous oil phase. Preferably, the microemulsion in a water in oil microemulsion. The water in oil microemulsion of the present invention may be used for deploying water soluble or water dispersible oil field or gas field production chemicals as described in International Patent Application No. WO 0100747 or in enhanced oil recovery.

Microemulsions in general are known, see, for example "Microemulsions", Editor I D Robb, Plenum Press, New York, 1982 which is herein incorporated by reference. Microemulsions differ from conventional emulsions in that they form spontaneously upon mixing of the oil phase, aqueous phase and the surfactant. They also differ from ordinary emulsions in having droplets of very small size or in having microdomains having at least one dimension of length, breadth or thickness of very small size. Thus, microemulsions appear clear to the naked eye or even the optical microscope, compared to the larger droplets (greater than 100 nm diameter) of conventional cloudy emulsions.

Suitably, the aqueous phase of the water in oil microemulsion is distributed in a continuous oil phase in the form of droplets having a diameter in the range 1 to 100 nm or in the form of microdomains having at least one dimension of length, breadth or thickness in the range 1 to 100 nm.

Where the aqueous phase of the water in oil microemulsion is distributed in the oil phase in the form of droplets, the droplets preferably have an average diameter in the range of 10 to 500 nm, more preferably 50 to 250 nm. The droplet size distribution is generally such that at least 90% of the diameters are within 20% or especially 10% of the average diameter. The microemulsions are transparent to the eye and are apparently isotropic.

Where the aqueous phase of the water in oil microemulsion is distributed in the oil phase in the form of microdomains, the microdomains preferably have at least one dimension of length, breadth or thickness in the range 10 to 500 nm, more preferably 50 to 250 nm.

The oil phase is essentially any liquid which is immiscible with the aqueous phase. For example the oil phase may be selected from the group consisting of liquid alkanes (preferably C₅-C₂₀ alkanes, more preferably C₈ to C₁₅ alkanes, most preferably C₉-C₁₂ alkanes, for example, n-hexane, n-nonane, n-decane, and n-undecane), alkenes, liquid alkyl halides (for example, carbon tetrachloride or dichloromethane) and liquid aromatic hydrocarbons (for example, benzene, toluene and xylene). The oil phase may also be a paraffin oil, a natural oil (for example, a vegetable or animal oil), diesel, kerosene, gas oil, crude oil, lubricant base oil, liquid carbon dioxide, liquid chlorofluorocarbons such as CCl₂F₂, CHCl₂F and CH₃CClF₂ (known as freons), tetrahydrofuran, dimethyl formamide and dimethyl sulfoxide.

The aqueous phase may additionally comprise a water miscible solvent such as methanol, ethanol, n-propanol, iso-propanol, n-butanol, iso-butanol, tert-butanol, butyl monoglycol ether, butyl diglycol ether, butyl triglycol ether, ethylene glycol mono butyl ether and ethylene glycol. Without wishing to be bound by any theory, it is believed that the presence of a water miscible solvent in the aqueous phase stabilises the microemulsion so that less ionic liquid surfactant is required to form a stable microemulsion. The amount of water miscible solvent which may be present in the aqueous phase is in the range 0.5 to 50 % by weight, preferably 5 to 30 % by weight based on the total weight of water and water miscible solvent. However, an advantage of the ionic liquid surfactant of the present invention is that the microemulsion is stable even in the absence of a water miscible solvent.

Generally, a salt such as sodium chloride or magnesium sulfate is added to the aqueous phase of a conventional microemulsion in order to enhance the stability of the microemulsion. Thus, the aqueous phase of a conventional microemulsion is generally saturated with the salt. However, a further advantage of the microemulsion of the present invention is that there is no requirement to add a salt to stabilise the emulsion. However, if deemed desirable, a salt may be included in the aqueous phase of the emulsion.

The volume fraction of the aqueous phase in the microemulsion is generally in the range from 1-50%, preferably 10 to 40%, more preferably 23 to 30%.

The ionic liquid surfactant is suitably present in the microemulsion in an amount ranging from 0.1 to 5 mole %, preferably 0.25 to 2 mole %, for example 0.5 to 1 mole %.

Where the water in oil microemulsion of the present invention is used to deploy a water-soluble or water-dispersible production chemical, the aqueous phase of the microemulsion may comprise fresh, tap, river, sea, produced or formation water. The aqueous phase may have a total salinity of 0-250 g/l, for example 5-50 g/l. The aqueous phase may have a pH of 0.5-9. Where the aqueous phase comprises a sea-water solution of a highly acidic production chemical such as, for example, a scale inhibitor, the aqueous phase usually has a highly acidic pH of 0.1-1. In such cases it may be necessary to neutralise the acidity of the aqueous phase by using ammonium hydroxide or an alkali metal hydroxide, especially sodium hydroxide, potassium hydroxide or lithium hydroxide, in order to bring the pH of the formulation to within a preferred range of from 2-6. Preferably, the aqueous phase is neutralised prior to being mixed with the organic phase and surfactant to form the microemulsion.

Mixtures of ionic liquid surfactants may be employed to prepare the microemulsion, for example, 2 or 3 ionic liquid surfactants.

It is important that the microemulsion is thermally stable. It is possible to devise microemulsions which are stable over a wide temperature range e.g. from ambient to 300°C or from 90 to about 150°C. However, it is not essential that the microemulsion is stable across the whole of the range of from ambient to 150°C. For example, the microemulsion may be stable between ambient and 70°C or between 40 and 80°C.

The microemulsion of the present invention forms spontaneously on gentle mixing of the aqueous phase, the oil phase and the ionic liquid surfactant in any order; conveniently, the aqueous phase is mixed last into a mixture of the oil phase and the ionic liquid surfactant. If the material made is initially cloudy, then a microemulsion has not been produced, and minor adjustments to the relative proportions of the ingredients or a change in the nature of the ionic liquid surfactant or the temperature may be needed.

It is also envisaged that the ionic liquid surfactants may be used to form conventional emulsions, in which, for example, the internal phase of the emulsion is distributed in a continuous external phase in the form of droplets having a diameter in the range 0.01 to about 100 microns.

Conventional emulsions differ from microemulsions in that it is necessary to input energy to form the emulsion. In principle, a microemulsion and a conventional emulsion may coexist.

The conventional emulsion may be an oil in water emulsion where an internal oil phase in dispersed in the form of droplets in a continuous external aqueous phase or a water in oil emulsion where an internal aqueous phase is dispersed in the form of droplets in a continuous external oil phase. As discussed above, the type of conventional emulsion is dependent upon the nature of the ionic liquid surfactant (emulsifier).

Where the ionic liquid surfactant has an HLB value of 3 to 8 and the surfactant is oil soluble, a water in oil emulsion may be formed by dissolving minor amounts of the oil soluble ionic liquid surfactant in the oil that is to form the continuous oil phase of the emulsion. The concentration of oil-soluble ionic liquid surfactant in the resulting solution may be in the range of from 0.1 to 5 mole %, preferably 0.25 to 2 mole %, most preferably 0.5 to 1 mole %. The emulsion is preferably formed by pouring the aqueous phase into the solution of the oil-soluble ionic liquid surfactant in the oil phase while intensive blending is applied (thereby imparting energy to form the emulsion). The blending operation for the emulsion should be designed to minimise the size of the internal phase water droplets since this may increase the stability of the emulsion. The mixture should be vigorously stirred or sheared for about 5 to 20 minutes, the rate of shear being highly dependent on the size and type of mixing device employed. Stirring rate and times should be designed to form small aqueous droplets, preferably having average diameters of from about 0.3 to about 100 microns and preferably from about 1 to about 10 microns.

Preferably, the internal phase of the emulsion should amount to from 10 to 70 percent, more preferably from 30 to 60 percent of the total volume of the emulsion.

Density control of the water in oil emulsion may be used to enhance its stability. This may be accomplished by addition of weighting agents to the internal aqueous phase of the emulsion. For example, minor amounts of soluble salts such as sodium or potassium chloride may be added to the internal aqueous phase. Suitably, the aqueous phase may comprise from 0.5 to 20 percent by weight of soluble salts.

Where the ionic liquid surfactant has an HLB value of greater than 9, preferably 9 to 18, and is water soluble, an oil in water emulsion may be formed by dissolving minor amounts of the water soluble ionic liquid surfactant in the aqueous phase. The concentration of water-soluble ionic liquid surfactant in the resulting solution may be in the range of from 0.1 to 5 mole%, preferably 0.25 to 2 mole%. The emulsion is preferably formed by pouring the oil phase into the solution of the water-soluble ionic liquid surfactant in the aqueous phase while intensive blending is applied, as described above for the preparation of a water in oil emulsion. The blending operation for the emulsion should be designed to minimize the size of the internal phase oil droplets since this may increase the stability of the emulsion. Stirring rate and times should be designed to form small oil droplets having average diameters of from about 0.3 to about 100 microns and preferably from about 1 to about 10 microns.

Preferably, the internal oil of the emulsion should amount to from 1 to 80 percent, more preferably from 5 to 50 percent of the total volume of the emulsion.

Suitably, the water in oil emulsion may be used to deploy a water-soluble or water-dispersible production chemical, as described above for a water in oil microemulsion. The conventional emulsion may also act as the base fluid of a wellbore fluid, for example, a drilling fluid or completion fluid. An advantage of the conventional emulsion is that the use of the ionic liquid surfactant renders the emulsion more stable under high temperature and/or high pressure conditions than emulsions formed using conventional emulsifiers. The emulsions are also more tolerant of metal ions and are less likely to form scums.

The ionic liquid surfactants of the present invention have many other applications including their use:
1) to prepare foam compositions, for example, for mobility control in gas and/or gas condensate reservoirs where the foam is used to block a high permeability zone and to divert a gas into a low permeability zone.
2) as cleaning agents or degreasers (where the ionic liquid surfactant acts as an emulsifier or a wetting agent).
3) in personal hygiene products (where the ionic liquid surfactant acts as an emulsifier or a wetting agent).
4) as hydrophobic solvents, particularly, terpene free hydrophobic solvents
5) as a component of drilling fluids, for example, the ionic liquid surfactant may act as a heat transfer agent (to transfer heat from the drill bit), as a lubricant for the drill bit, as a weighting agent or as a fluid loss control agent.
6) as additives during oil production, for example, the surfactant may act as a gas hydrate inhibitor, corrosion inhibitor or drag reducer.
7) as additives during water flooding operations (enhanced oil recovery from oil wells)
8) as lubricants or lubricant additives
9) as hydraulic fluids or hydraulic fluid additives
10) for dispersion of oil spillages
11) as liquid media for chemical reactions (for example, micellar catalysis).
12) as phase transfer agents.
13) designer microemulsion compositions.
14) mechanical fluids such as milling or cutting fluids.
15) drug delivery agents.

The invention therefore further provides the use of a salt according to the invention in the above applications. In one such embodiment, the invention provides a composition in the form of a foam, which comprises, as a foaming agent, a salt according to the invention. Such a composition may for example be a composition suitable for use in a gas and/or gas condensate reservoir.

## Claims

1. A salt that is in a liquid state at a temperature below 150°C and in which the anion has one of the general formulae
R^{a}.P(O).O₂²⁻
R^{a}.P(O).(OR^{b}).O⁻
R^{a}.R^{b}.PO⁻
(R^{a}O)(R^{b}O).PO⁻
(R^{a}O).PO.O₂²⁻
in which one of R^{a} and R^{b} represents an alkyl, alkenyl or alkynyl group having at least 8 carbon atoms, which may be unsubstituted or substituted by one or more substituents selected from halogen atoms, hydroxyl groups, and phenyl groups, and which may be optionally interrupted by one or more oxygen atoms; and the other of R^{a} and R^{b} (if present) has one of these meanings or represents a C₁₋₇ alkyl, alkenyl or alkynyl group, which may be unsubstituted or substituted by one or more substituents selected from halogen atoms, hydroxyl groups, C₁₋₄ alkoxy groups, and phenyl groups.

2. A salt as claimed in claim 1, in which one of R^{a} and R^{b} represents an alkyl, alkenyl or alkynyl group having from 8 to 30 carbon atoms, which may be unsubstituted or substituted by one or more substituents selected from halogen atoms, hydroxyl groups, and phenyl groups, and which may be optionally interrupted by one or more oxygen atoms; and the other of R^{a} and R^{b} has one of these meanings or represents a C₁₋₇ alkyl, alkenyl or alkynyl group, which may be unsubstituted or substituted by one or more substituents selected from halogen atoms, hydroxyl groups, C₁₋₄ alkoxy groups, and phenyl groups.

3. A salt as claimed in claim 2, in which one of R^{a} and R^{b} represents an alkyl, alkenyl or alkynyl group having from 12 to 24 carbon atoms, which may be unsubstituted or substituted by one or more substituents selected from halogen atoms, hydroxyl groups, and phenyl groups, and which may be optionally interrupted by one or more oxygen atoms; and the other of R^{a} and R^{b} has one of these meanings or represents a C₁₋₇ alkyl, alkenyl or alkynyl group, which may be unsubstituted or substituted by one or more substituents selected from halogen atoms, hydroxyl groups, C₁₋₄ alkoxy groups, and phenyl groups.

4. A salt as claimed in any one of the preceding claims, in which each of R^{a} and R^{b} represents a hydrocarbyl or a halogenated hydrocarbyl group.

5. A salt as claimed in any one of the preceding claims, in which at least one of R^{a} and R^{b} represents a dodecyl, hexadecyl, octadecyl, or 2,4,4-trimethylpentyl group.

6. A salt as claimed in any one of claims 1 to 4, in which at least one of R⁸ and/or R^{b} has the formula -(CH₂CH₂O)ₓR where R is H or methyl and x is an integer of from 4 to 15.

7. A salt as claimed in any one of the preceding claims, in which one of R^{a} and R^{b} represents a C₁₋₄ alkyl group.

8. A salt as claimed in any one of the preceding claims, in which the salt is in a liquid state at a temperature below 100°C.

9. A salt as claimed in any one of the preceding claims in which the cation in the salt is a quaternary ammonium or phosphonium ion, or a cation derived from a heterocyclic ring structure.

10. A salt as claimed in claim 9, in which the cation in the salt is a quaternary ammonium or phosphonium ion, or a cation derived from derived from a heterocyclic ring structure selected from imidazolium, imidazolinium, pyridinium, pyrazolium, thiazolium, isothiazolinium, azathiozolium, oxothiazolium, oxazinium, oxazolium, oxaborolium, dithiozolium, trizdium, selenozolium, oxaphopholium, pyrollium, borolium, furanium, thiophenium, phospholium, pentazolium, indolium, indolinium, oxazolium, isooxazolium, isotriazolium, tetrazolium, benzofuranium, diborzofuranium, benzothiophenium, dibenzothiophenium, thiadiazolium, pyrimidinium, pyrazinium, pyridazinium, piperazinium, piperidinium, morpholenium, pyranium, annolinium, phthalzinium, quinazolinium, quinaxalinium, quinolinium, isoquinolinium, thazinium, oxazinium, and azaannulenium.

11. A salt as claimed in claim 9, in which the cation is selected from the group consisting of:
(a) cations of general formula:
[R¹R²R³R⁴M]⁺
wherein M is N or P;
R¹ and R² are independently selected from methyl and ethyl groups;
R³ is a C₈ to C₃₀ alkyl group; and
R⁴ is selected from the group consisting of methyl, ethyl and a C₈ to C₃₀ alkyl group; (b) cations of general formula:
[R¹R²R³R⁴M]⁺
wherein M is N or P;
R¹ and R² are independently selected from methyl and ethyl groups;
R³ is -(CH₂)ₙC₆H₄R' wherein n is an integer of from 0 to 5; and R' is selected from the group consisting of H, Cl, Br, I, NO₂, C₁ to C₃₀ alkyl groups, -SO₂R", -SOR" and -C(O)R" (wherein R" is a C₁ to C₃₀ alkyl group) with the proviso that the R³ group has at least 8 carbon atoms; and
R⁴ is a C₈ to C₃₀ alkyl group or is an R³ group;
(c) cations of general formula:
[(R²CO₂CH₂CH₂)₂M(R¹)CH₂CH₂OH]⁺
wherein M is N or P;
R¹ is methyl or ethyl; and
R² is a C₅ to C₃₀ alkyl group;
(d) cations of general formula:
[R¹R²N((CH₂CH₂O)ₓH)₂]⁺
wherein R¹ and R² are independently selected from methyl and ethyl; and
x is an integer of from 4 to 15;
(e) cations of general formula:
[R¹R²R³NOR⁴]⁺
wherein R¹ and R² are independently selected from methyl and ethyl;
R³ is a C₈ to C₃₀ alkyl group; and
R⁴ is H or a C₁ to C₄ alkyl group;
(f) cations of general formula:
[(CH₃)₃N(CH₂CH₂O)ₓR¹]⁺
wherein x is an integer of from 1 to 5, and R¹ is a C₁ to C₃₀ alkyl group with the proviso that the -(CH₂CH₂O)ₓR¹ substituent has at least 8 carbon atoms; and
(g) cations of general formula:
[R¹R²NCH₂CH₂NR³R⁴R⁵]⁺
wherein R¹, R², R³ and R⁴ are independently selected from methyl and ethyl; and
R⁵ is a hydrocarbyl group selected from (i) C₈ to C₃₀ alkyl groups or (ii) -(CH₂)ₙC₆H₄R' wherein n is an integer of from 0 to 5, R' is selected from the group consisting of H, Cl, Br, I, NO₂, C₁ to C₃₀ alkyl groups, -SO₂R", -SOR" and -C(O)R" (wherein R" is a C₁ to C₃₀ alkyl group) with the proviso that R⁵ has at least 8 carbon atoms.

12. A salt as claimed in claim 9, in which the cation is selected from:
(a) cations of the general formula: 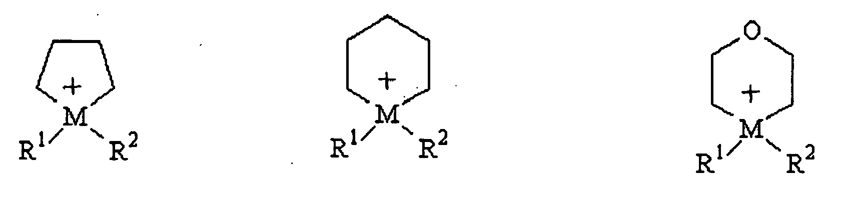 wherein M is N or P;
R¹ is a C₈ to C₃₀ alkyl group; and
R² is selected from methyl, ethyl or a C₈ to C₃₀ alkyl group;
(b) cations of the general formula: 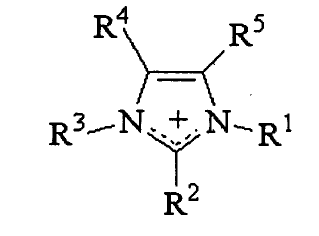 wherein R¹ is a C₈ to C₃₀ alkyl group;
R² is selected from H, methyl and ethyl;
R³ is selected from methyl, ethyl and C₈ to C₃₀ alkyl groups; and
R⁴ and R⁵ are H or a halide;
(c) cations of the general formula: 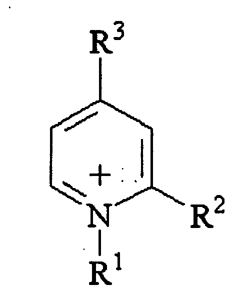 wherein R¹ is selected from (i) C₈ to C₃₀ alkyl groups and (ii) -(CH₂)ₙC₆H₄R' wherein n is an integer of from 0 to 5, R' is selected from the group consisting of H, Cl, Br, I, NO₂, C₁ to C₃₀ alkyl groups, -SO₂R", -SOR" and -C(O)R" (wherein R" is a C₁ to C₃₀ alkyl group) with the proviso that -(CH₂)ₙC₆H₄R' contains at least 8 carbon atoms; and
R² and R³ are independently selected from H and dimethylamino, or are R¹ groups; and
(e) cations of general formulae: 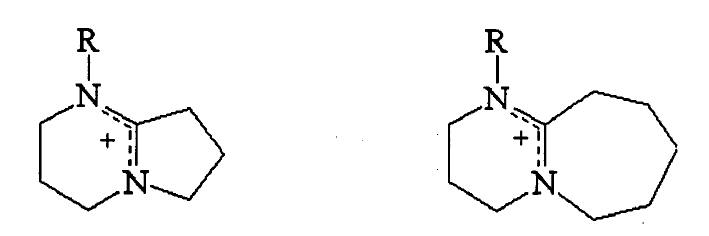
wherein R is selected from (i) C₈ to C₃₀ alkyl groups and (ii) -(CH₂)ₙC₆H₄R' wherein n is an integer from 0 to 5, R' is selected from the group consisting of H, Cl, Br, I, NO₂, C₁ to C₃₀ alkyl groups, -SO₂R", -SOR" and -C(O)R" (wherein R" is a C₁ to C₃₀ alkyl group) with the proviso that -(CH₂)ₙC₆H₄R' contains at least 8 carbon atoms.

13. An emulsion which comprises (i) an oil phase, (ii) an aqueous phase and (iii) as a surfactant, a salt as claimed in any one of the preceding claims.

14. An emulsion as claimed in claim 13, in the form of a microemulsion having an interfacial tension of less than 1 mN m⁻¹.

15. An emulsion as claimed in either claim 13 or claim 14, in the form of a water in oil microemulsion in which the aqueous phase is distributed in a continuous oil phase in the form of droplets having a diameter in the range 1 to 100 nm or in the form of microdomains having at least one dimension of length, breadth or thickness in the range 1 to 100 nm.

16. An emulsion as claimed in either claim 13 or claim 14, in which the internal phase of the emulsion is distributed in a continuous external phase in the form of droplets having a diameter in the range 0.01 to 100 microns.

17. An emulsion as claimed in any one of claims 13 to 16, in which the oil phase is selected from the group consisting of liquid alkanes, alkenes, liquid alkyl halides, liquid aromatic hydrocarbons, paraffin oils, vegetable or animal oils, diesel, kerosene, gas oil, crude oil, lubricant base oil, liquid carbon dioxide, liquid chlorofluorocarbons, tetrahydrofuran, dimethyl formamide and dimethyl sulfoxide.

18. An emulsion as claimed in any one of claims 13 to 17, in which the aqueous phase additionally comprises a water miscible solvent.

19. A composition in the form of a foam, which comprises, as a foaming agent, a salt as claimed in any one of claims 1 to 12.

20. A composition as claimed in claim 19, suitable for use in a gas and/or gas condensate reservoir.
